# EUROPEAN PATENT SPECIFICATION

(11) **EP 0 582 712 B1**
(45) Date of publication and mention of the grant of the patent: **05.02.1997**
(21) Application number: 92906225.5
(22) Date of filing: 03.03.1992
(51) Int. Cl.: F04B 39/10, F04B 39/00

(54) **HERMETIC COMPRESSOR**
HERMETISCHER VERDICHTER
COMPRESSEUR HERMETIQUE

(43) Date of publication of application: 16.02.1994
(73) Proprietor: MATSUSHITA REFRIGERATION COMPANY, Higashiosaka-shi, Osaka-fu 577 (JP)
(72) Inventor: SASANO, Hiroshi 6-16-303, Kugenumatachibana 2-chom, Kanagawa 251 (JP); HAMADA, Koshi 6-17-206, Kugenumatachibana 2-chome, Kanagawa 251 (JP); KUBOTA, Akihiko 8-1, Tsujidotaiheidai 2-chome, Kanagawa 251 (JP)
(74) Representative: Sorrell, Terence Gordon
(86) International application number: PCT/JP92/00248
(87) International publication number: WO 93/18304

(56) References cited:
- FR-A- 2 655 135
- GB-A- 2 163 236
- JP-A- 3 078 581
- JP-A-63 309 787
- JP-Y-55 028 913

## Description

The present invention relates to a hermetic compressor.

These days, improvement of the compression efficiency of a reciprocating-type hermetic compressor used in a cooling system, such as a refrigerator and a freezer, is increasingly coming into demand.

A hermetic compressor of this type is disclosed in JP-A-3-78581. The compressor includes a valve plate with two discharge holes. The discharge holes are sealed, on a discharge side, by a central portion of a spring valve which is secured in position by a stopper. The stopper is itself secured in position by a cover member secured by bolts to the valve plate. The axial length of the discharge holes is equal to the thickness of the valve plate.

Another hermetic compressor is shown in JP-Y2-55-28913. This also includes a valve plate having two discharge holes and a spring secured in position by a stopper. The spring acts on a sealing washer which, in use, seals the discharge holes. When gas is exhausted from a cylinder of the compressor, the washer is caused to rise axially away from the valve plate causing the spring to deform. The spring contacts with the washer at a central portion thereof spaced from the discharge holes. The axial length of the discharge holes is equal to the thickness of the valve plate.

Yet another hermetic compressor is shown in FR-A-2 655 135. This excludes a valve plate having a discharge hole. The discharge hole is located in a recess of the valve plate. A discharge reed valve located in the recess seals the discharge hole. A spring presses on a side of the discharge reed valve facing away from the discharge hole. The spring presses on a portion of the discharge reed valve spaced from the discharge hole. The spring also acts as a stop for the discharge reed valve.

US-A-4 723 896 discloses yet another hermetic compressor. In this compressor the volume of a discharge hole arranged on a valve plate is made small so as to improve compression efficiency. Also, a reed valve is positioned over the discharge hole of the valve plate, and a supporting spring, a valve stopper and a retaining spring are arranged on the reed valve, thus temporarily retaining these members. When a cylinder head is secured to a cylinder block, the retaining spring is pressed so as to secure the cylinder head to the cylinder block. The supporting spring contacts the reed valve at a neck portion thereof spaced from the discharge valve.

A problem encountered with the compressor of US-A-4 723 896 is that it is not possible, with the cylinder head removed from the cylinder block, to test whether the reed valve for closing the discharge hole and the spring reed for urging the reed valve in the closing direction are positioned so as to operate correctly.

Also, in a machine having a greater cylinder volume, having only a single discharge hole might increase the over-compression loss, thus causing a reduction in the compression efficiency. The over-compression loss is a result of the following. When the pressure within a cylinder reaches a high level, and such high level pressure slightly exceeds the opening pressure of the discharge reed valve, the discharge reed valve opens. The small difference between the high pressure and the opening pressure of the discharge reed valve causes the over-compression loss.

Accordingly, an object of the present invention is to provide a hermetic compressor with improved compression performance.

The present invention provides a hermetic compressor comprising: a hermetic case; a cylinder block elastically mounted within said case, said cylinder block including a cylinder having an open end; a piston within said cylinder; a motor mounted on said cylinder block for reciprocating the piston within the cylinder; a valve plate secured to the cylinder block at the open end thereof; an elongated recess formed in a surface of said valve plate on a side facing away from the piston; said valve plate has a discharge hole which opens to the inside of the recess; a discharge reed located within said recess, said discharge reed having a sealing portion for sealing said discharge hole; a spring reed for pressing on a side of said discharge reed away from the discharge hole; a stopper secured to the valve plate which fixes said spring reed; a cylinder head including a discharge plenum covering said stopper, said spring reed, said discharge reed and said recess; and said discharge hole includes a ring-shaped discharge valve seat on the inside of the recess, a step being formed to one side of the recess away from the discharge hole, characterised in that, when the stopper is secured to the valve plate, a central portion of the spring presses the sealing portion of the discharge reed onto the valve seat of the discharge hole.

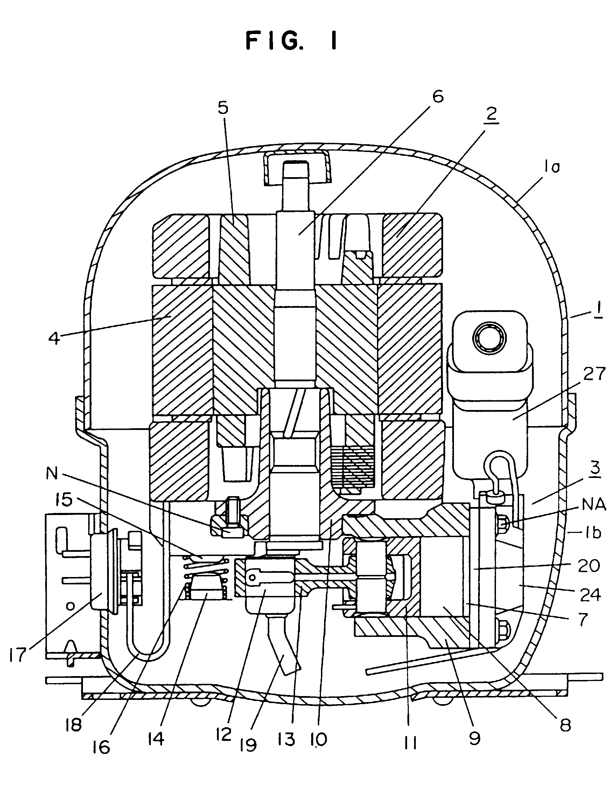

The foregoing and further features of the present invention will be more readily understood from the following description of a preferred embodiment with reference to the accompanying drawings, of which:-
Fig. 1 is a sectional view of a hermetic compressor according to the present invention;
Fig. 2 is a longitudinal sectional view of a compressor unit shown in Fig. 1;
Fig. 3 is a sectional view taken on line A-A of Fig. 2;
Fig. 4 is an exploded perspective view of a valve plate according to the present invention; and
Fig. 5 is a sectional view showing a discharge reed of the present invention, which is closed.

A detailed description of the present invention will be described herein with reference to the drawings.

Reference numeral 1 indicates a hermetic case obtained by fitting an upper case 1a into the periphery of a lower case 1b and by welding the connecting portion therebetween. A motor unit 2 providing a driving source and a compressor unit 3 for compressing a refrigerant gas are elastically supported within the hermetic case 1.

The motor unit 2 comprises a stator 4, a rotor 5 and a crank shaft 6 onto which the rotor 5 is fitted.

The compressor unit 3 is placed below the motor unit 2 and secures a cylinder block 9 having a cylinder 8 with an opening 7 and a supporting member 10 for supporting the crank shaft 6 of the motor unit 2 via a screw N. A piston 11 and a crank portion 12 of the crank shaft 6 are interconnected via a connecting rod 13 in order to reciprocate the piston 11 accommodated within the cylinder 8.

An oil feeding tube 19 fitted at the bottom of the crank shaft 6 feeds lubricating oil pooled at the bottom of the lower case 1b to a machine by the rotation of the crank shaft 6.

A supporting pin 14 secured on the lower case 1b of the hermetic case 1 and a securing pin 15 elastically support the cylinder block 9 of the compressor unit 3 by way of a compressor spring 16.

A power-supply terminal 17 arranged on the lower case 1b is connected to the stator 4 of the motor unit 2 by a lead line 18.

A valve plate 20 closes the opening 7 of the cylinder 8 of the cylinder block 9. The valve plate 20 positions a plate gasket 21 and a suction reed 22 adjacent to the opening 7 and a head gasket 23 and a cylinder head 24 away from the opening 7, and secures the four corners via screws NA.

A suction plenum 25 and a discharge plenum 26 are formed in the cylinder head 24 adjacent to the valve plate 20. A suction muffler 27 formed of a synthetic resin is interconnected to the suction plenum 25. The suction muffler 27 is connected to the suction portion of the cooling system outside of the hermetic case 1.

A suction hole opening into the cylinder 8 is formed in the valve plate 20 and faces the suction plenum 25. Two discharge holes 29 opening into the cylinder 8 are also formed on the valve plate 20 and face the discharge plenum 26.

The suction reed is formed of a flat plate and constructed such that the periphery thereof is removed so as to leave a suction valve portion 30, and holes 31 for receiving the screws NA are formed at four corners thereof.

Also, an elongated recess 32 is formed on the valve plate 20 on a side facing away from the piston 11. The discharge holes 29 are placed in the recess 32. Ring-shaped discharge valve seats are arranged coaxially with the discharge holes inside the recess 32. The height of the discharge valve seats 33 is made less than the depth of the recess 32.

Discharge reeds 34 each have a seal portion 35 at one end covering the periphery of a respective discharge valve seat 33 and an ear 36 at the other end. Within the recess 32, a pair of banks 38 extending inwardly adjacent to ends 37 are each formed between a respective discharge hole 29 and an end 37 of the recess 32. The ears 36 of each discharge reed 34 are placed in the spaces formed by the banks 38 and the ends 37. The discharge reeds 34 are formed symmetrically vertically as well as horizontally, so that either of the obverse or reverse sides of the discharge reeds can be accommodated in the recess 32. Steps 39, the heights of which are substantially equivalent to that of the discharge valve seats 33, are formed on the portions of the recess 32 abutting against the ears 36. The discharge reeds 34 each abut against a respective step 39 and a discharge valve seat.

A spring reed 40 is formed of a spring material with both ends 41 bent and is made shorter than the longitudinal distance between both ends of the elongated recess 32. The spring reed 40 is placed in the recess 32 with the discharge reeds 34, and ends 41 of the spring reed 40 are brought into contact with the ends of the discharge reeds 34.

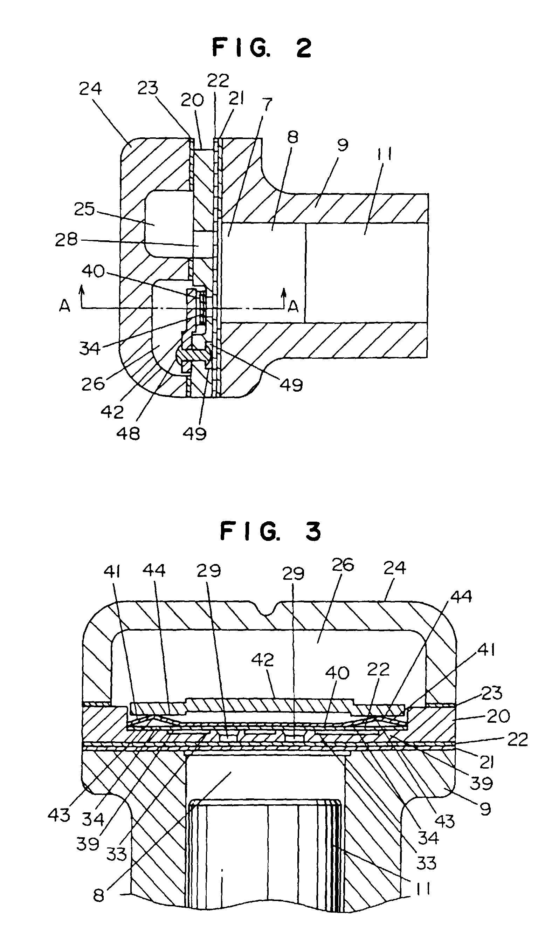

A stopper 42 has surfaces 44 for pressing bends 43 of the spring reed 40 and a fixing portion 45 for fixing the valve plate 20. Portions of the surfaces 44 extend into the recess 32. The fixing portion 45 includes two holes 46 which match holes 47 of the valve plate 20, thereby securing the fixing portion 45 and the valve plate 20 via rivets 48. A spot facing 49 is arranged on the valve plate 20 on a side facing away from the recess 32 receiving the rivets 48, thereby preventing the rivets 48 from projecting. When the stopper 42 is secured to the valve plate 20, the spring reed 40 deforms so as to press the discharge reeds 34 on to the discharge valve seats 33 substantially by means of a central portion thereof, as shown in Fig. 3. Such pressing determines the opening pressure of the discharge holes 29 by the discharge reeds 34. When the spring reed 40 presses the discharge reeds 34 to the discharge valve seats 33, small spaces are produced between either end of the spring reed 40 and either end 37 of the recess 32.

A hole 50 of the stopper 42 is arranged to overlap the recess 32 to allow the discharge gas to flow easily into the discharge plenum 26.

The head gasket 23 is interposed between the abutting surfaces of the valve plate 20 and the cylinder head 24.

Holes 51 for receiving the screws NA are formed at four corners of the valve plate 20.

In a compressor so constructed, a refrigerant gas returned from the cooling system is fed to the suction plenum 25 of the cylinder head 24 via the suction muffler 27. In accordance with the operation of the piston 11, the refrigerant gas is sucked into the cylinder 8 from the suction hole 28 of the valve plate 20 by the opening of the suction valve 30. As the piston 11 approaches the valve plate 20, the compressed refrigerant gas passes through the discharge holes 29 of the valve plate 20 and pushes away the discharge reeds 34 and spring reed 40 so as to be discharged into the discharge plenum 26 of the cylinder head 24 and fed to the cooling system via a communicating tube (not shown).

As stated above, the discharge reed 34, the spring reed 40 and stopper 42 are fixed to the valve plate 20, and the operation of the discharge reeds 34 can be confirmed, thus maintaining a predetermined function of the compressor.

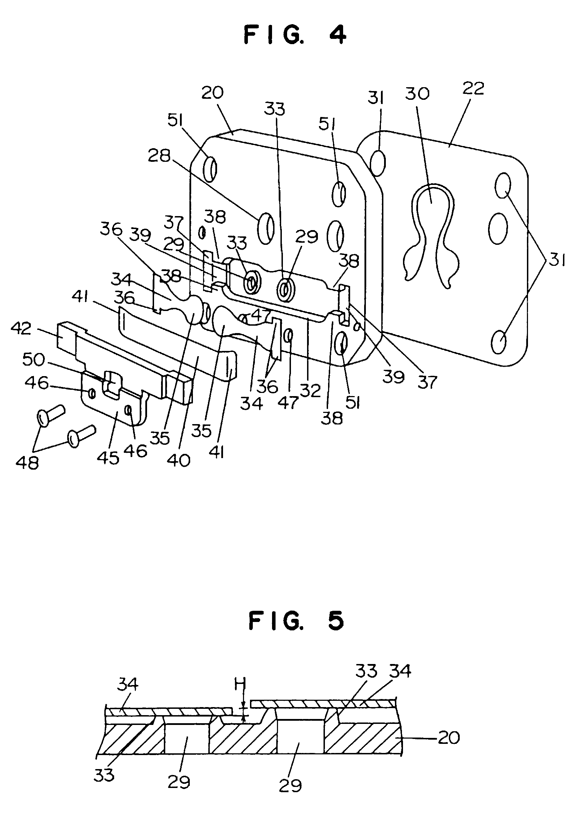

The discharge holes 29 are located in the recess 32 of the valve plate 20, thus the axial length of the discharge holes is less than the thickness of the valve plate 20. Thus, the refrigerant gas remaining in these spaces can be reduced, and accordingly, the compression efficiency can be improved. Also, since a number of discharge holes 29 can be provided, an increase in the over-compression loss can be avoided. Further, the discharge holes 29 are each provided with a discharge reed 34. Consequently, even though the difference in level H shown in fig. 5 is produced when forming respective discharge valve seats 33, the discharge holes can still be reliably sealed. In particular, a plurality of discharge valve seats 33 are formed within the recess 32 arranged on the valve plate 20 so as to have flat surfaces, thus ensuring good surfaces for sealing the discharge holes 29. Since the discharge reeds 34 are vertically symmetrical, it is not necessary to produce special parts for automatic assembly, thus enabling a simplification of the assembly process.

## Claims

1. A hermetic compressor comprising: a hermetic case (1); a cylinder block (9) elastically mounted within said case (1), said cylinder block (9) including a cylinder (8) having an open end (7); a piston (11) within said cylinder (8); a motor (2) mounted on said cylinder block (9) for reciprocating the piston (11) within the cylinder (8); a valve plate (20) secured to the cylinder block (9) at the open end (7) thereof; and elongated recess (32) formed in a surface of said valve plate (20) on a side facing away from the piston (11); said valve plate (20) has a discharge hole (29) which opens to the inside of the recess (32); a discharge reed (34) located within said recess (32), said discharge reed having a sealing portion (35) for sealing said discharge hole (29); a spring reed (40) for pressing on a side of said discharge reed (34) facing away from the discharge hole (29); a stopper (42) secured to the valve plate (20) which fixes said spring reed (40); a cylinder head (24) including a discharge plenum (26) covering said stopper (42), said spring reed (40), said discharge reed (34) and said recess (32); and said discharge hole (29) includes a ring-shaped discharge valve seat (33) on the inside of the recess (32), a step (39) being formed to one side of the recess (32) away from the discharge hole (29), characterised in that, when the stopper (42) is secured to the valve plate (20), a central portion of the spring reed (40) presses the sealing portion (35) of the discharge reed (34) onto the valve seat (33) of the discharge hole (29).

2. A hermetic compressor as claimed in claim 1, characterised in that the valve plate (20) includes two discharge holes (29).

3. A hermetic compressor as claimed in claim 2, characterised in that banks (38) for positioning the discharge reeds (34) are each formed between a respective discharge hole (29) and an end (37) of said recess (32).

4. A hermetic compressor as claimed in claim 3, characterised in that said spring reed (40) is formed of a spring material whose ends (41) are bent, the length of the spring reed (40) between said ends (41) being made shorter than the longitudinal distance between the ends (37) of the recess (32).

## Patentansprüche

1. Luftdichter Verdichter umfassend: einen luftdichten Behälter (1); einen in dem Behälter (1) federnd gelagerten Zylinderblock (9), wobei der Zylinderblock (9) einen Zylinder (8) mit einem offenen Ende (7) aufweist; einen Kolben (11) innerhalb des Zylinders (8); einen auf dem Zylinderblock (9) angebrachten Motor (2) zum Hin- und Herbewegen des Kolbens (11) in dem Zylinder (8); eine Ventilplatte (20), die an dem Zylinderblock (9) am offenen Ende (7) desselben befestigt ist; und eine längliche Ausnehmung (32), die in der von dem Kolben (11) abgekehrten Seite der Ventilplatte (20) ausgebildet ist; wobei die Ventilplatte (20) eine Auslaßöffnung (29) hat, die in das Innere der Ausnehmung (32) mündet; eine Auslaßmembran (34), die in der Ausnehmung (32) angeordnet ist, wobei die Auslaßmembran einen Abdichtbereich (35) zum Abdichten der Auslaßöffnung (29) hat; eine Federmembran (40) die gegen die von der Auslaßöffnung (29) abgekehrte Seite der Auslaßmembran (34) drückt; einen an der Ventilplatte (20) befestigten Anschlag (42), der die Federmembran (40) festlegt; einen Zylinderkopf (24) mit einer Auslaßkammer (26), die den Anschlag (42), die Federmembran (40), die Auslaßmembran (34) und die Ausnehmung (32) überdeckt; und wobei die Auslaßöffnung (29) an der Innenseite der Ausnehmung (32) einen ringförmigen Auslaßventilsitz (33) aufweist, wobei auf der von der Auslaßöffnung (29) abgekehrten Seite der Ausnehmung (32) eine Stufe (39) ausgebildet ist, dadurch **gekennzeichnet,** daß ein mittlerer Bereich der Federmembran (40) den Abdichtbereich (35) der Auslaßmembran (34) an den Ventilsitz (33) der Auslaßöffnung (29) andrückt, wenn der Anschlag (42) an der Ventilplatte (20) befestigt ist.

2. Luftdichter Verdichter nach Anspruch 1, dadurch **gekennzeichnet,** daß die Ventilplatte (20) zwei Auslaßöffnungen (29) hat.

3. Luftdichter Verdichter nach Anspruch 2, dadurch **gekennzeichnet**, daß Vorsprünge (38) zum Festlegen der Auslaßmembranen (34) jeweils zwischen einer zugeordneten Auslaßöffnung (29) und einem Ende (37) der Ausnehmung (32) ausgebildet sind.

4. Luftdichter Verdichter nach Anspruch 3, dadurch **gekennzeichnet,** daß die Federmembran (40) aus einem federnden Material hergestellt ist, dessen Enden (41) gekrümmt sind, wobei die Länge der Federmembran (40) zwischen diesen Enden (41) kürzer ist als der Längsabstand zwischen den Enden (37) der Ausnehmung (32).

## Revendications

1. Compresseur hermétique comprenant : un carter hermétique (1) ; un bloc cylindre (9) monté élastiquement dans ledit carter (1), ledit bloc cylindre (9) contenant un cylindre (8) comportant une extrémité ouverte (7) ; un piston (11) à l'intérieur dudit cylindre (8) ; un moteur (2) monté sur ledit bloc cylindre (9) pour déplacer le piston (11) dans un mouvement de va-et-vient à l'intérieur du cylindre (8) ; une plaque à orifices (20) fixée au bloc cylindre (9) à son extrémité ouverte (7) ; un évidement de forme allongée (32) formé dans une surface de ladite plaque à orifices (20) sur un côté tourné du côté opposé au piston ; ladite plaque à orifices (20) comporte un trou de décharge (29) qui s'ouvre sur l'intérieur de l'évidement (32) ; une lame de décharge (34) située à l'intérieur dudit évidement (32), ladite lame de décharge comportant une portion obturatrice (35) pour obturer ledit trou de décharge (29) ; une lame à ressort (40) pour appuyer sur un côté de ladite lame de décharge (34) tourné dans le sens opposé au trou de décharge (29) ; un obturateur (42) fixé à la plaque à orifices (20) qui fixe ladite lame à ressort (40) ; une tête de cylindre (24) comprenant une chambre de décharge (26) couvrant ledit obturateur (42), ladite lame à ressort (40), ladite lame de décharge (34) et ledit évidement (32) ; et ledit trou de décharge (29) comprend un siège de soupape de décharge en forme d'anneau (33) sur l'intérieur de l'évidement (32), un gradin (39) étant formé sur un côté de l'évidement (32) écarté du trou de décharge (29), caractérisé par le fait que, quand l'obturateur (42) est fixé à la plaque à orifices (20), une portion centrale de la lame à ressort (40) pousse la portion obturatrice (35) de la lame de décharge (34) sur le siège de soupape (33) du trou de décharge (29).

2. Compresseur hermétique tel que revendiqué dans la revendication 1, caractérisé par le fait que la plaque à orifices (20) comporte deux trous de décharge (29).

3. Compresseur hermétique tel que revendiqué dans la revendication 2, caractérisé par le fait que des saillies (38) pour positionner les lames de décharge (34) sont formées chacune entre un trou de décharge respectif (29) et une extrémité (37) dudit évidement (32).

4. Compresseur hermétique tel que revendiqué dans la revendication 3, caractérisé par le fait que ladite lame à ressort (40) est constituée par une matière à ressort dont les extrémités (41) sont recourbées, la longueur de la lame à ressort (40) entre lesdites extrémités (41) étant rendue plus courte que la distance longitudinale entre les extrémités (37) de l'évidement (32).
